# EUROPÄISCHE PATENTSCHRIFT

(11) **EP 0 774 370 B1**
(45) Veröffentlichungstag und Bekanntmachung des Hinweises auf die Patenterteilung: **14.08.2002**
(21) Anmeldenummer: 96113882.3
(22) Anmeldetag: 30.08.1996
(51) Int. Cl.: B60J 5/10, B62D 25/10

(54) **Heckklappe für ein Kraftfahrzeug**
Tailgate for a motor vehicle
Hayon de véhicule automobile

(30) Priorität: 16.11.1995 DE 19542765
(43) Veröffentlichungstag der Anmeldung: 21.05.1997
(73) Patentinhaber: Volkswagen Aktiengesellschaft, 38436 Wolfsburg (DE)
(72) Erfinder: Elmitt, Karl, 38104 Braunschweig (DE)

(56) Entgegenhaltungen:
- DE-A- 4 400 374
- FR-A- 2 579 941
- FR-A- 2 695 877
- US-A- 3 749 440

## Beschreibung

Die Erfindung betrifft eine Heckklappe für ein Kraftfahrzeug nach dem Oberbegriff des Anspruchs 1.

Eine bekannte, gattungsgemäße Heckklappe (DE 44 00 374 A1) ist an einer Hecköffnung des Kraftfahrzeugs nach oben aufklappbar und besteht aus einem unteren und einem oberen Klappenteil. Beide Klappenteile sind durch eine Achse dergestalt miteinander verbunden, daß zum Öffnen des Kofferraums nur das untere Klappenteil durch Verschwenken um diese Achse aufgeklappt werden kann. Beim Öffnen der gesamten Heckklappe schwenkt diese um eine obere Achse an der Hecköffnung.

Ein schwenkbarer unterer Klappenteil an einer insgesamt schwenkbaren Heckklappe erfordert eine aufwendige Winkelhebelanordnung in Verbindung mit Gewichtsausgleichvorrichtungen. Zudem ist die Festlegung beider Klappenteile gegenüber dem Aufbau aufwendig.

In einer weiter bekannten Anordnung (US-PS 3 749 440) ist eine Heckklappe mit Gestängen im oberen Bereich einer Hecköffnung schwenkbar befestigt und kann in üblicher Weise nach oben aufgeklappt werden, wodurch die gesamte Hecköffnung zugänglich ist. Zudem ist die Heckklappe über eine lösbare Schwenkverbindung an der Unterseite der Hecköffnung nach hinten als waagrechte Verlängerung der Ladekante klappbar. Auch diese Anordnung ist durch die komplizierte Gestängeführung und die lösbare untere Schwenkbefestigung aufwendig. Die Heckklappe weist eine in Senkrechter Richtung zwischen einer Offenstellung und einer geschlossenen Stellung verschiebbare Scheibe auf.

Eine weiter bekannte Abdeckung für eine Hecköffnung eines Fahrzeugs (US-PS 3 567 209) besteht aus einer oberen Fensterscheibe, die in Schiebeführungen gehalten ist. Zum Öffnen kann diese Fensterscheibe schräg nach oben zwischen die Dachaußenhaut und die Dachinnenverkleidung eingeschoben werden. Ein unteres, bis zur Fensterbrüstung reichendes Abdeckteil in Blechkonstruktion kann zum Öffnen nach unten ins Heck in den Bereich des Stoßfängers eingeschwenkt werden. Dies erfordert dort viel zusätzlichen Bauraum. Eine Verschiebung der Fensterscheibe in den Dachbereich ist nur möglich, wenn sich die Einschiebstellung etwa geradlinig an die Geschlossenstellung der Fensterscheibe anschließt. Eine solche Lösung ist somit praktisch nur bei Fahrzeugen mit Fließheck möglich und für kastenförmige Heckausbildungen nicht geeignet.

In einer ähnlichen bekannten Abdeckung einer Hecköffnung (DE 44 07 131 A1) ist ein unteres Abdeckelement ebenfalls in den unteren Heckaufbau mit großem Platzbedarf einschiebbar. Bei üblichen Fahrzeugaufbauten dürfte nach unten nicht soviel Bauraum zur Verfügung stehen, daß das Schiebeelement mit seiner Oberkante bis zum Kofferraumboden einschiebbar ist, so daß demgegenüber ein ungünstiger Absatz mit erhöhter Ladekante verbleibt. Das obere Abdeckelement ist hier als Heckklappe ausgeführt, die nach oben aufschwenkbar ist.

Bei einem bekannten Fahrzeug (BMW 525i Touring) ist eine große Heckklappe nach oben aufklappbar, die eine Hecköffnung bis zum Boden des Kofferraums freigibt. Im oberen Bereich dieser Heckklappe ist zudem ein Heckfenster angeordnet, das in der Heckklappe schwenkbar gelagert ist und für sich separat nach oben aufklappbar ist. Auch diese Anordnung mit einer Fensterklappe in der Heckklappe ist aufwendig. Für einen Zugang zur unteren Ladekante ist die gesamte Heckklappe nach oben zu verschwenken.

Aufgabe der Erfindung ist es demgegenüber, eine einfach aufgebaute Heckklappe zu schaffen, mit der ein bequemer und einfacher Zugang zu einer tiefen Ladekante einer Hecköffnung möglich ist.

Diese Aufgabe wird mit den Merkmalen des Anspruchs 1 gelöst.

Gemäß Anspruch 1 weist die Heckklappe einen von einer Geschlossenstellung in eine Offenstellung schwenkbaren Heckklappenrahmen auf. An diesem Heckklappenrahmen sind beidseitig Schiebeführungen angebracht, in denen wenigstens ein unteres bewegliches Abdeckelement als unteres Schiebeelement gehalten ist. Dieses untere Schiebeelement kann von einer unteren Geschlossenstellung nach oben verschoben werden, so daß ein unterer Bereich der Heckklappenöffnung geöffnet und der dahinter liegende Kofferraum zugänglich wird. Dazu braucht die Heckklappe bzw. der Heckklappenrahmen nicht aufgeklappt zu werden.

Damit ist eine bequeme Beladung des Kofferraums nur durch Hochschieben des Schiebeelements und ohne aufwendige Öffnung der Heckklappe durchführbar, was besonders vorteilhaft bei beengten Platzverhältnissen und kleinen Gegenständen ist. Die Ladekante liegt insbesondere für eine Beladung mit schweren Gegenständen in bequemer, niedriger Höhe, bevorzugt in der Höhe des Koffenrraumbodens. Nur bei großen Gegenständen ist es erforderlich, die Heckklappe insgesamt zu öffnen, wodurch die gesamte Hecköffnung für die Beladung frei wird.

Ein weiterer Vorteil besteht darin, daß längere Gegenstände bei geschlossener Heckklappe transportiert werden können, die bei geöffnetem Schiebeelement nach hinten vorstehen können. Die Öffnungsweite des Durchsteckschlitzes kann der Höhe des Gegenstandes durch einen entsprechenden Verschiebeweg des Schiebeelements angepaßt werden. Dadurch entsteht vorteilhaft wenig zusätzlicher offener Verbindungsraum zur Fahrzeugaußenseite.

Die erfindungsgemäße Anordnung ist in kastenförmigen Heckausbildungen von Kraftfahrzeugen gut einsetzbar. Da die Verschiebung des Schiebeelements unmittelbar an der Heckklappe erfolgt, ist kein zusätzlicher Aufwand und Bauraum für eine Versenkung im Karosserieaufbau erforderlich.

In einer bevorzugten Weiterbildung weist die Heckklappe wenigstens ein weiteres, oberes bewegliches Abdeckelement als oberes Schiebeelement auf, das in einer weiteren Schiebeführung am Heckklappenrahmen nach unten verschiebbar gehalten ist. Damit wird erreicht, daß wechselweise entweder durch Verschieben des oberen Schiebeelements ein oberer Klappenbereich, oder durch Verschieben des unteren Schiebeelements ein unterer Klappenbereich zur Beladung zugänglich wird. Besonders bei leichten Gegenständen, die ohne großen Kraftaufwand angehoben werden können, kann eine Beladung bei geöffnetem oberen Schiebeelement bequem durchgeführt werden, wobei der obere Rand des unteren Schiebeelements in dessen Geschlossenstellung dann die Ladekante bildet. Das obere Schiebeelement kann ähnlich wie ein Seitenfenster abgesenkt werden und kann wegen der rückwärtigen Lage für eine weitgehend zugfreie Lüftung des Fahrzeuginnenraums verwendet werden. Bei entsprechender Ausführung der Schiebeführung und der Betätigung sind dazu ähnlich wie bei einem Fensterheber Zwischenstellungen möglich. Weiter können auch lange Gegenstände transportiert werden, die aus dem Bereich des geöffneten oberen Schiebeelements vorstehen.

Die erfindungsgemäße Anordnung mit Schiebeelementen ist vorzugsweise für nach oben aufschwenkbare Heckklappen bestimmt, kann jedoch mit ähnlichen Vorteilen auch an seitlich schwenkbaren Hecktüren verwendet werden.

In einer Ausführungsform läuft der Heckrahmen einstückig entsprechend der Größe der Hecköffnung um und das oder die Schiebeelemente sind im Rahmenfeld des Heckklappenrahmens verschiebbar gehalten. Dies ist eine einfache und kostengünstige Ausführung, die gegenüber üblichen Heckklappen ohne Schiebeelemente nur geringe ergänzende Einbauten erfordert. Beispielsweise kann hier eine übliche Heckklappe mit ortsfester Heckscheibe verwendet werden, bei der lediglich der untere Blechteil als unteres Schiebeelement ausgestaltet ist. Bei der Öffnung der gesamten Heckklappe ist hier allerdings nach hinten durch den umlaufenden Heckrahmen derselbe Schwenkraum erforderlich wie bei üblichen Heckklappen.

In einer alternativen Ausführungsform ist dagegen der Heckklappenrahmen geteilt, wobei wenigstens ein erster Teilrahmen der Größe eines oberen Hecköffnungsbereichs, beispielsweise eines üblichen Heckfensters, entspricht. Dieser erste Teilrahmen ist am Fahrzeug nach oben aufklappbar. Dieser erste Teilrahmen enthält Schiebeführungen, in denen das untere Schiebeelement gehalten ist. In der unteren Geschlossenstellung dieses Schiebeelements steht dies somit frei aus dem Teilrahmen nach unten ab und liegt am Rahmen der Hecköffnung an. Wenn das untere Schiebeelement nach oben verschoben und geöffnet wird, ist es in den Bereich des Teilrahmens verschiebbar. Dadurch wird die Heckklappe insgesamt verkürzt. Beim Aufklappen ist somit nur wenig Schwenkraum hinter dem Fahrzeug erforderlich, was bei engen Platzverhältnissen, beispielsweise in Parkhäusern oder engen Parklücken, überhaupt das Öffnen der Heckklappe ermöglicht oder zumindest bequemer gestaltet.

Das untere Schiebeelement kann hier als Plattenteil ausgebildet sein oder seinerseits einen zweiten umlaufenden Teilrahmen aufweisen, der in den Bereich des ersten Teilrahmens nach oben verschiebbar ist.

Zu beiden Seiten der Hecköffnung sind üblicherweise die Heckleuchten angebracht. Da der obere erste Teilrahmen mit seinen Seitenholmen nur etwa bis zur Mitte der Hecköffnung reicht, bleibt darunter ein geeigneter fester Einbauraum für die Heckleuchten zwischen denen dann das untere Schiebeelement liegt.

Auch bei der Ausführung mit einem oberen, verschwenkbaren Teilrahmen kann von diesem ein oberes Schiebeelement gehalten werden, das dann ebenfalls frei nach unten über den Teilrahmen hinausgeschoben werden kann.

Für eine einfache Wasserabdichtung wird vorgeschlagen, das untere Schiebelement fahrzeuginnenseitig unter die obere Heckklappenabdeckung bzw. das obere Schiebeelement einzuschieben, wodurch obere Teile untere Teile für einen günstigen Wasserablauf überdecken. Bei der Abdichtung kann hier auf bekannte und bewährte Anordnungen und Dichtprofile von Fahrzeugfenstern und Schiebedächern zurückgegriffen werden.

Die Abdeckung des oberen Heckklappenbereichs ist wegen der erforderlichen Sicht als Heckfenster auszubilden. Eine optisch ansprechende Heckausbildung wird erreicht, wenn auch das untere Schiebeelement transparent als verschiebbare Glasscheibe ausgeführt ist. Dazu kann beispielsweise Sicherheitsglas oder armierter Kunststoff verwendet werden. Damit im Kofferraum transportierte Gegenstände von außen nicht zu erkennen sind, kann durch Einfärbung, Siebdruck oder dergleichen, das transparente Schiebeelement zumindest teilweise undurchsichtig gemacht werden. Zudem können weitere an sich bekannte Kofferraumabdeckungen als horizontale Platten oder Spanntücher zwischen den Rücksitzlehnen und dem Heckklappenbereich verwendet werden.

Zur Verschiebung der Schiebeelemente können für eine Handbetätigung an sich bekannte, von außen zugängliche Griffe mit Schließeinrichtungen eingesetzt werden. In einer Komfortausstattung kann auch eine elektromotorische Betätigung ggf. mit Infrarot-Fernbetätigung vorgesehen sein, wie sie bei Fensterhebern und Schiebedachsteuerungen für Fahrzeuge bereits bekannt ist.

Anhand einer Zeichnung werden Ausführungsbeispiele der Erfindung weiter erläutert.

Es zeigen
- Fig. 1: eine perspektivische Ansicht einer Heckklappe mit Schiebeelementen,
- Fig. 2: ein Fahrzeug mit der Anordnung nach Fig. 1 bei geöffnetem, oberen Schiebeelement,
- Fig. 3: eine perspektivische Ansicht einer alternativen Ausführungsform einer Heckklappe mit zwei Schiebelementen,
- Fig. 4: ein Fahrzeug mit der Heckklappenanordnung nach Fig. 3 mit geöffnetem unteren Schiebeelement,
- Fig. 5: bis 8 schematische Seitenansichten der Heckklappe nach Fig. 3 mit unterschiedlichen Öffnungszuständen und
- Fig. 9: eine schematische Draufsicht auf einen Querschnitt durch eine Heckklappe mit zwei Schiebeelementen.

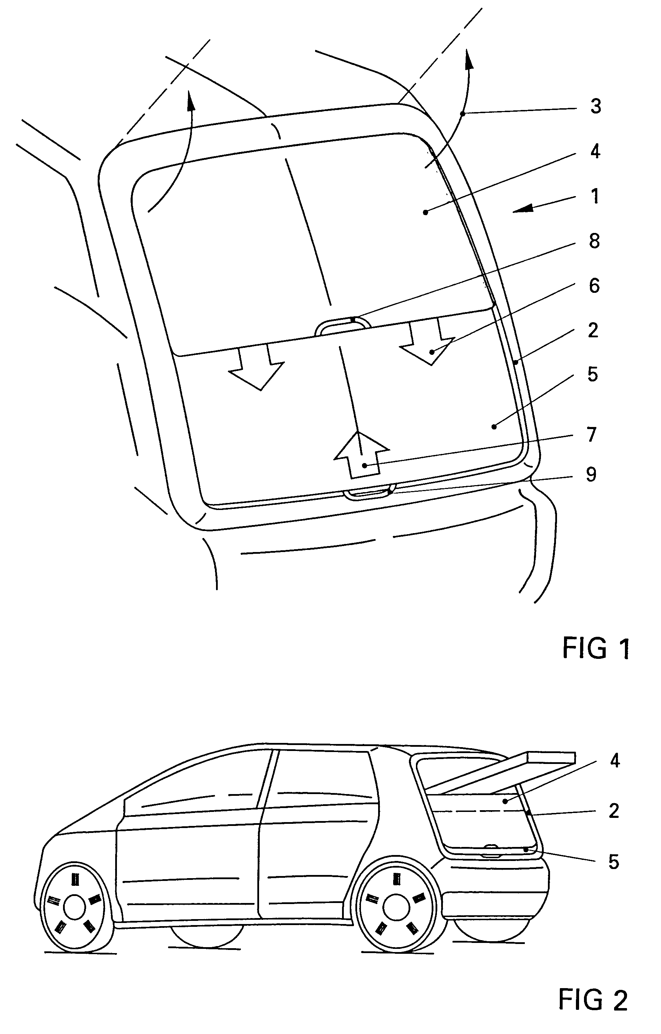

In Fig. 1 ist eine erste Ausführungsform einer Heckklappe 1 dargestellt, mit einem einstückig umlaufenden Heckklappenrahmen 2, der nach oben in üblicher Weise aufklappbar ist (Pfeile 3).

In (nicht explizit dargestellten) Führungen am Heckklappenrahmen sind ein oberes Schiebeelement 4 und unteres Schiebeelement 5 vertikal verschiebbar gehalten. Beide Schiebeelemente sind als transparente Scheiben ausgeführt.

Das obere Schiebeelement 4 ist aus seiner dargestellten geschlossenen Stellung nach unten entsprechend der Pfeile 6 über das untere Schiebeelement 5 schiebbar, so daß der obere Rahmenbereich ohne Aufklappen des Heckklappenrahmens 2 geöffnet ist. Dies ist in Fig. 2 an einem Fahrzeug dargestellt, bei dem eine lange schmale Kiste aus diesem Bereich ragt und dadurch transportierbar wird.

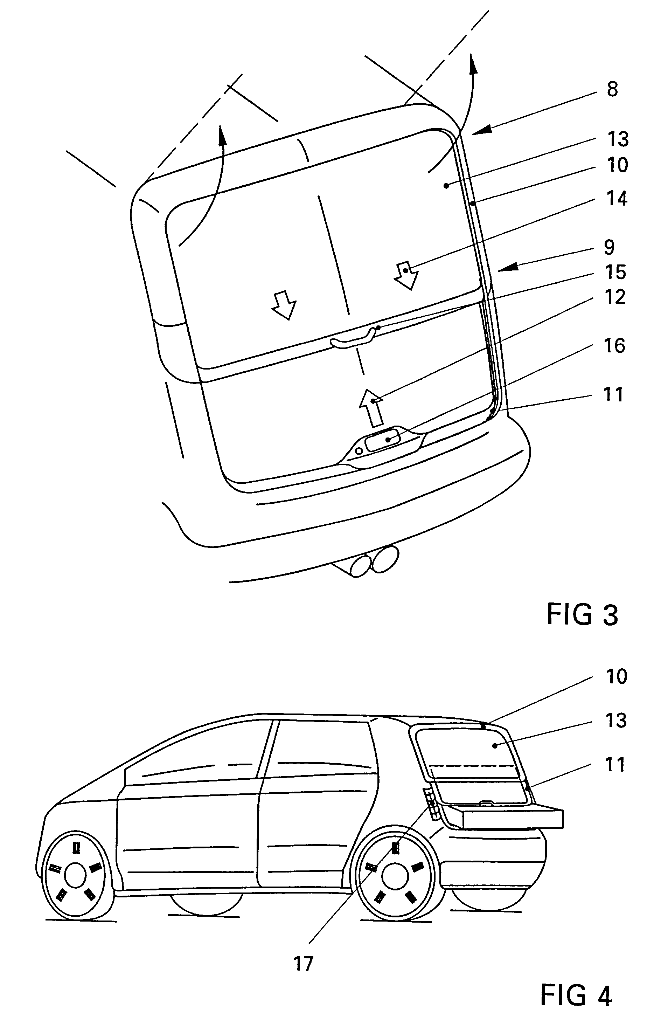

Das untere Schiebeelement 5 kann entsprechend dem Pfeil 7 nach oben unter das obere, geschlossene Schiebeelement verschoben werden, wodurch der untere Heckbereich ohne Aufklappen des Heckklappenrahmens bis zu einer Ladekante in der Höhe des Kofferraumbodens geöffnet wird. Damit ist beispielsweise ein Transport langer Gegenstände entsprechend Fig. 4 möglich.

Für eine Handbetätigung der Schiebeelemente 4, 5 sind dort Griffmulden in Verbindung mit (nicht dargestellten) Schlössern angebracht.

In Fig. 3 ist eine alternative Ausführung einer Heckklappe 8 dargestellt, mit einem geteilten Heckklappenrahmen 9. Dieser besteht aus einem ersten oberen Teilrahmen 10, der über eine obere (nicht dargestellte) Achse nach oben aufklappbar ist und aus einem zweiten unteren Teilrahmen 11. In beiden Teilrahmen 10 und 11 sind transparente Scheiben eingesetzt.

Der zweite untere Teilrahmen ist in einer (nicht dargestellten) Schiebeführung am oberen Teilrahmen 10 gehalten und aus der dargestellten Geschlossenstellung als unteres Schiebeelement nach oben verschiebbar (Pfeil 12). Dadurch wird ohne Aufklappen des oberen Teilrahmens 10 der untere Bereich der Hecköffnung für eine Beladung frei. Damit ist ein langer Gegenstand entsprechend Fig. 4 transportierbar.

Zudem ist in weiteren (nicht dargestellten) Schiebeführungen im oberen Teilrahmen 10 ein oberes Schiebeelement 13 als Heckscheibe entsprechend der Pfeile 14 nach unten über den nach unten geschobenen Teilrahmen 11 verschiebbar, so daß der obere Bereich der Hecköffnung ohne Aufklappen des oberen Teilrahmens 10 geöffnet ist. Damit wird auch auch hier der Transport eines langen Gegenstands ensprechend Fig. 2 möglich.

Für die Handbetätigung zur Verschiebung des Teilrahmens 11 und des oberen Schiebeelements 13 sind Handgriffe 15, 16 vorgesehen.

Aus Fig. 4 ist ersichtlich, daß der untere Teilrahmen 11 in gut geeigneter Weise zwischen beidseitig orstfest angebrachte Heckleuchten 17 einsetzbar ist.

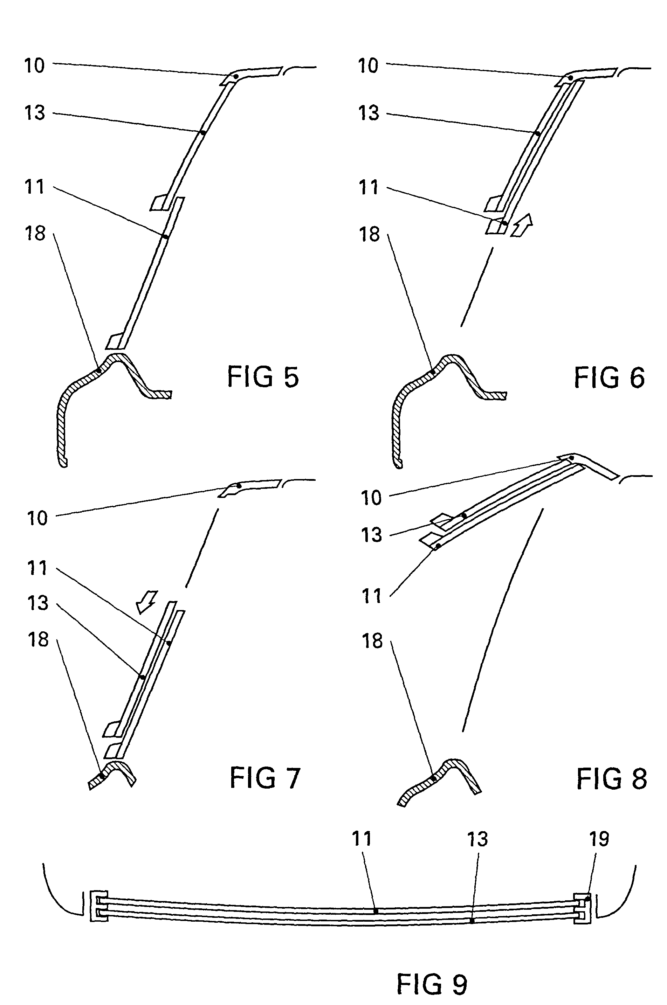

In den schematischen Darstellungen nach den Fig. 5 bis 8 sind unterschiedliche Schiebestellungen des unteren Schiebeelements 11 (unterer Teilrahmen) und des oberen Schiebeelements 13 gezeigt. Im unteren Teil der Fig. ist schematisch jeweils ein Schnitt durch einen Stoßfänger 18 und im oberen Bereich ein Schnitt durch den Heckklappenrahmen 10 gezeigt.

In Fig. 5 sind das obere Schiebeelement 13 und das untere Schiebeelement 11 in ihrer Geschlossenstellung, wodurch die Hecköffnung bei geschlossenem Teilrahmen 10 dicht abgedeckt ist. Ersichtlich überdeckt dabei das obere Schiebeelement 13 mit seinem unteren Rand den oberen Rand des unteren Schiebeelements 11.

In Fig. 6 ist das untere Schiebeelement 11 nach oben unter das obere Schiebeelement 13 geschoben, wodurch der untere Bereich der Hecköffnung für eine Beladung freigegeben ist.

In Fig. 7 ist dagegen das obere Schiebeelement 13 über das untere Schiebeelement 11 nach unten geschoben, wodurch der obere Bereich der Hecköffnung freigegeben wird.

In Fig. 8 ist eine Zwischenstellung für die Öffnung der gesamten Heckklappe bzw. des oberen Teilrahmens 10 gezeigt, wobei beide Schiebeelemente 11, 13 nach oben in den Bereich des Teilrahmens 10 geschoben sind. Dadurch ist die Länge der Heckklappe insgesamt verkürzt und es entsteht ersichtlich praktisch kein Schwenkraumbedarf hinter dem Fahrzeug.

In der Draufsicht auf einen schematischen Querschnitt durch eine Heckklappe (Fig. 9) sind beidseitige Schiebeführungen als Doppel-U-Profile (19) gezeigt, in denen an der Fahrzeugaußenseite jeweils das obere Schiebeelement 13 (in einer Ausführung nach Fig. 1 das Schiebeelement 4) und an der Fahrzeuginnenseite das Schiebeelement 11 (in der Ausführung nach Fig. 1 das Schiebeelement 5) gehalten und schiebebeweglich geführt sind.

## Patentansprüche

1. Heckklappe (1,8) für ein Kraftfahrzeug, die um eine an der Hecköffnung des Kraftfahrzeugs fest angebrachte Achse schwenkbar ist und bei der ein an der Heckklappe (1,8) beweglich gehaltenes Klappenteil als unteres Abdeckelement (5,11) für einen unteren Klappenbereich vorgesehen ist, wobei
- die Heckklappe (1,8) einen von einer Geschlossenstellung in eine Offenstellung schwenkbaren Heckklappenrahmen (2,9) aufweist, und wobei
- das untere bewegliche Abdeckelement (5 am Heckklappenrahmen (2,9) nach oben bewegbar gehalten ist, so daß bei einer Geschlossenstellung des Heckklappenrahmens (2,9) ein unterer Klappenbereich öffenbar ist,
**dadurch gekennzeichnet, daß** das untere bewegliche Abdeckelement als unteres Schiebeelement (5,11) vertikal in einer Schiebeführung am Heckklappenrahmen (2,9) nach oben (7,12) verschiebbar gehalten ist.

2. Heckklappe nach Anspruch 1, **dadurch gekennzeichnet, daß** die Heckklappe wenigstens ein weiteres oberes bewegliches Abdeckelement als oberes Schiebeelement (4,13) aufweist, das in einer Schiebeführung am Heckklappenrahmen nach unten verschiebbar gehalten ist, so daß in Verbindung mit einer unteren Schiebestellung des unteren Schiebeelements (5,11) mit dem oberen Schiebeelement (4,13) ein oberer Klappenbereich öffenbar ist.

3. Heckklappe nach Anspruch 1 oder Anspruch 2, **dadurch gekennzeichnet, daß** an der Oberseite des Heckklappenrahmens (2,9) Scharnierteile für eine Befestigung im oberen Bereich der Hecköffnung des Fahrzeugs angebracht sind, so daß die Heckklappe (1,8) nach oben aufklappbar ist.

4. Heckklappe nach einem der Ansprüche 1 bis 3, **dadurch gekennzeichnet, daß** der Heckklappenrahmen (2) einstückig entsprechend der Größe der Hecköffnung ausgeführt ist und das oder die Schiebeelemente (4,5) im Rahmenfeld des Heckklappenrahmens (2) verschiebbar gehalten sind.

5. Heckklappe nach einem der Ansprüche 1 bis 3, **dadurch gekennzeichnet, daß**
- der Heckklappenrahmen (9) geteilt ist und wenigstens einen ersten oberen Teilrahmen (10) entsprechend der Größe eines oberen Hecköffnungsbereichs aufweist und dieser obere Teilrahmen (10) nach oben am Fahrzeug aufklappbar ist, und
- von diesem oberen Teilrahmen (10) das untere Schiebeelement (11) gehalten und in dessen Bereich nach oben verschiebbar ist.

6. Heckklappe nach Anspruch 5, **dadurch gekennzeichnet, daß** das untere Schiebeelement (11) von einem zweiten umlaufenden Teilrahmen umfaßt ist und dieser in den Bereich des oberen Teilrahmens (10) nach oben verschiebbar ist.

7. Heckklappe nach Anspruch 5 oder Anspruch 6, **dadurch gekennzeichnet, daß** das obere Schiebeelement (13) vom oberen Teilrahmen (10) gehalten und aus dem Teilrahmenbereich nach unten verschiebbar ist.

8. Heckklappe nach einem der Ansprüche 1 bis 7, **dadurch gekennzeichnet, daß** das untere Schiebeelement (5,11) als flächiges Bauteil fahrzeuginnenseitig unter das obere Abdeckelement bzw. das obere Schiebeelement (4,13 verschiebbar ist.

9. Heckklappe nach einem der Ansprüche 1 bis 8, **dadurch gekennzeichnet, daß** das untere Schiebeelement (5,11) transparent ausgeführt ist.

10. Heckklappe nach einem der Ansprüche 1 bis 8, **dadurch gekennzeichnet, daß** wenigstens eines der Schiebeelemente elektromotorisch verschiebbar ist.

## Claims

1. Rear flap (1, 8) for a motor vehicle, which can be pivoted about an axis provided in a fixed position on the rear opening of the motor vehicle and in which a flap part, which is held in a moveable manner on the rear flap (1, 8), is provided as a lower covering element (5, 11) for a lower flap region,
- the rear flap (1, 8) having a rear-flap frame (2, 9) which can be pivoted from a closed position into an open position, and
- the lower, moveable covering element (5) being held on the rear-flap frame (2, 9) in a manner such that it can be moved upwards, so that, when the rear-flap frame (2, 9) is in a closed position, a lower flap region can be opened,
**characterized in that** the lower, moveable covering element, as a lower sliding element (5, 11), is held in a manner such that it can be displaced vertically upwards (7, 12) on the rear-flap frame (2, 9) in a sliding guide.

2. Rear flap according to Claim 1, **characterized in that** the rear flap has at least one further, upper, moveable covering element as an upper sliding element (4, 13) which is held in a manner such that it can be displaced downwards on the rear-flap frame in a sliding guide, with the result that an upper flap region can be opened by the upper sliding element (4, 13) in conjunction with a lower sliding position of the lower sliding element (5, 11).

3. Rear flap according to Claim 1 or Claim 2, **characterized in that** hinge parts for a fastening in the upper region of the rear opening of the vehicle are fitted to the upper side of the rear-flap frame (2, 9), so that the rear flap (1, 8) can be swung open upwards.

4. Rear flap according to one of Claims 1 to 3, **characterized in that** the rear-flap frame (2) is designed as a single piece corresponding to the size of the rear opening and the sliding element or sliding elements (4, 5) are held in a manner such that they can be displaced within the frame area of the rear-flap frame (2).

5. Rear flap according to one of Claims 1 to 3, **characterized in that**
- the rear-flap frame (9) is divided and has at least one first, upper subframe (10) corresponding to the size of an upper rear-opening region and this upper subframe (10) can be swung open upwards on the vehicle, and
- the lower sliding element (11) is held by this upper subframe (10) and can be displaced upwards within the region of the said subframe.

6. Rear flap according to Claim 5, **characterized in that** the lower sliding element (11) is enclosed by a second encircling subframe and the latter can be displaced upwards into the region of the upper subframe (10).

7. Rear flap according to Claim 5 or Claim 6, **characterized in that** the upper sliding element (13) is held by the upper subframe (10) and can be displaced downwards out of the sub-frame region.

8. Rear flap according to one of Claims 1 to 7, **characterized in that** the lower sliding element (5, 11) as a flat component can be displaced on the inside of the vehicle under the upper covering element or the upper sliding element (4, 13).

9. Rear flap according to one of Claims 1 to 8, **characterized in that** the lower sliding element (5, 11) is of transparent design.

10. Rear flap according to one of Claims 1 to 8, **characterized in that** at least one of the sliding elements can be displaced by means of an electric motor.

## Revendications

1. Hayon (1, 8) pour un véhicule automobile, qui peut pivoter autour d'un axe monté fixement sur l'ouverture arrière du véhicule automobile et dans lequel une partie de volet maintenue de manière mobile sur le hayon (1, 8) est prévue en tant qu'élément de recouvrement inférieur (5, 11) pour une partie de volet inférieure, dans lequel
- le hayon (1, 8) présente un cadre de hayon (2, 9) pouvant pivoter d'une position fermée dans une position ouverte, et dans lequel
- l'élément de recouvrement inférieur (5) mobile est maintenu sur le cadre de hayon (2, 9) de manière mobile vers le haut, de sorte que dans une position fermée du cadre de hayon (2, 9), une partie de volet inférieure puisse être ouverte, **caractérisé en ce que** l'élément de recouvrement inférieur mobile est maintenu en tant qu'élément coulissant inférieur (5, 11) de manière déplaçable vers le haut (7, 12) verticalement dans une coulisse sur le cadre de hayon (2, 9).

2. Hayon selon la revendication 1, **caractérisé en ce que** le hayon présente au moins un autre élément de recouvrement supérieur mobile en tant qu'élément coulissant supérieur (4, 13) qui est maintenu de manière déplaçable vers le bas dans une coulisse sur le cadre de hayon, de sorte qu'en relation avec une position de coulissement inférieure de l'élément coulissant inférieur (5, 11) avec l'élément coulissant supérieur (4, 13) une partie de volet supérieure puisse être ouverte.

3. Hayon selon la revendication 1 ou la revendication 2, **caractérisé en ce que** des parties de charnière pour une fixation dans la partie supérieure de l'ouverture arrière du véhicule sont prévues sur la partie supérieure du cadre de hayon (2, 9), de sorte que le hayon (1, 8) puisse être rabattu vers le haut.

4. Hayon selon l'une quelconque des revendications 1 à 3, **caractérisé en ce que** le cadre de hayon (2) est réalisé d'une seule pièce correspondant à la taille de l'ouverture arrière et le ou les éléments coulissants (4, 5) sont maintenus de manière déplaçable dans le champ du cadre de hayon (2).

5. Hayon selon l'une quelconque des revendications 1 à 3, **caractérisé en ce que**
- le cadre de hayon (9) est divisé et présente au moins un premier cadre partiel supérieur (10) correspondant à la taille d'une partie d'ouverture arrière supérieure et ce cadre partiel supérieur (10) peut être rabattu vers le haut sur le véhicule, et
- l'élément coulissant inférieur (11) est maintenu par ce cadre partiel supérieur (10) et est déplaçable vers le haut dans la région de celui-ci.

6. Hayon selon la revendication 5, **caractérisé en ce que** l'élément coulissant inférieur (11) est entouré par un deuxième cadre partiel périphérique et celui-ci est déplaçable vers le haut dans la région du cadre partiel supérieur (10).

7. Hayon selon la revendication 5 ou la revendication 6, **caractérisé en ce que** l'élément coulissant supérieur (13) est maintenu par le cadre partiel supérieur (10) et est déplaçable vers le bas hors de la région du cadre partiel.

8. Hayon selon l'une quelconque des revendications 1 à 7, **caractérisé en ce que** l'élément coulissant inférieur (5, 11) est déplaçable sous forme de composant plat du côté intérieur du véhicule sous l'élément de recouvrement supérieur ou l'élément coulissant supérieur (4, 13).

9. Hayon selon l'une quelconque des revendications 1 à 8, **caractérisé en ce que** l'élément coulissant inférieur (5, 11) est réalisé de manière transparente.

10. Hayon selon l'une quelconque des revendications 1 à 8, **caractérisé en ce qu'**au moins l'un des éléments coulissants est déplaçable par le biais d'un moteur électrique.
